Europäisches Patentamt

European Patent Office

Office européen des brevets

(19)

(11) Numéro de publication: **0 375 537 B1**

(12) **FASCICULE DE BREVET EUROPEEN**

(45) Date de publication de fascicule du brevet: **01.03.95**  (51) Int. Cl.⁶: **C04B 41/50**

(21) Numéro de dépôt: **89403544.3**

(22) Date de dépôt: **19.12.89**

(54) **Procédé pour la protection antioxydation de produits en matériau composite contenant du carbone, et produits obtenus par le procédé.**

(30) Priorité: **20.12.88 FR 8816862**

(43) Date de publication de la demande:
**27.06.90 Bulletin 90/26**

(45) Mention de la délivrance du brevet:
**01.03.95 Bulletin 95/09**

(84) Etats contractants désignés:
**BE CH DE ES GB IT LI SE**

(56) Documents cités:
**DE-A- 3 315 975**
**US-A- 3 881 039**
**US-A- 4 530 853**

**SOVIET INVENTIONS ILLUSTRATED semaine E13, abrégé no. 25703, 12 mai 1982, Derwent Publications Ltd., London, GB;& SU-A-833864 (M.K. SHAFORENKO) 30.05.1981**

(73) Titulaire: **SOCIETE EUROPEENNE DE PROPUL-SION**
**24, rue Salomon de Rothschild**
**F-92150 Suresnes (FR)**

(72) Inventeur: **Cavalier, Jean-Claude**
**Chemin Molinier-Louens**
**F-33290 Le Pian Medoc (FR)**
Inventeur: **Nale, Alain**
**lieu dit Bisseau**
**F-33240 Saint Romain La Virvée (FR)**

(74) Mandataire: **Joly, Jean-Jacques et al**
**Cabinet Beau de Loménie**
**158, rue de l'Université**
**F-75340 Paris Cédex 07 (FR)**

EP 0 375 537 B1

## Description

La présente invention concerne la protection anti-oxydation de produits en matériaux composites contenant du carbone.

Les matériaux composites dits thermostructuraux sont utilisés pour la réalisation de pièces devant montrer un bon comportement thermomécanique, en particulier dans les domaines spatial, aéronautique et du freinage. Ces matériaux sont formés par un renfort fibreux réfractaire, par exemple en carbone ou en céramique, densifié par une matrice, par exemple également en carbone ou en céramique.

Pour des applications impliquant un séjour des pièces à température élevée en milieu oxydant, les composites à matrice céramique peuvent être préférés aux composites à matrice carbone en raison de la mauvaise tenue du carbone à l'oxydation.

Une protection anti-oxydation reste toutefois nécessaire pour les composites à matrice céramique lorsque ceux-ci contiennent du carbone. Il en est ainsi dans le cas de composites de type carbone-céramique dont le renfort fibreux est en carbone tels que les composites C-SiC (carbone-carbure de silicium). Il en est également ainsi dans le cas de composites de type céramique - céramique, par exemple SiC-SiC (carbure de silicium - carbure de silicium) comprenant une couche d'interphase en carbone entre les fibres et la matrice comme décrit dans le brevet FR 84 11591.

La protection anti-oxydation des composites thermostructuraux a donné lieu à de nombreux travaux.

Une solution connue consiste à former sur la pièce en matériau composite un revêtement résistant à l'usure et à l'oxydation, généralement un revêtement en carbure de silicium (SiC) réalisé par dépôt chimique en phase vapeur.

Il est toutefois en pratique impossible de réaliser un tel revêtement externe sans qu'apparaissent des défauts soit au moment de la fabrication (défauts en forme de trous d'épingle), soit au cours de l'utilisation du produit (fissuration). Le matériau composite n'est alors pas parfaitement isolé du milieu oxydant ambiant.

Pour remédier à ces défauts, il a été proposé de réaliser un revêtement supplémentaire en un matériau tel qu'un verre de type borate ou borosilicate qui, par son passage à l'état pâteux à partir d'une certaine température, vient colmater les trous et fissures du revêtement SiC.

Une autre solution connue consiste à réaliser une protection de type interne par dépôt de bore en phase vapeur au sein de la porosité résiduelle du matériau composite, comme décrit dans le brevet US 4 582 751.

Il est par ailleurs connu de former sur des pièces en graphite un revêtement de protection contre l'oxydation, en déposant sur la surface de l'électrode une masse visqueuse contenant des composés alcalins et en effectuant ensuite un traitement thermique à une température de 1050 à 1150°K. Un tel procédé, destiné à des électrodes par four à arc, est décrit dans le document DE-A-3 315 975.

La présente invention a pour but de fournir un procédé permettant d'améliorer encore la protection anti-oxydation d'un produit en matériau composite contenant du carbone.

Ce but est atteint conformément à l'invention, au moyen d'un procédé qui comprend les étapes consistant à :

- réaliser un traitement d'imprégnation au moins en partie sous vide pour incorporer à coeur, au sein de la porosité résiduelle ouverte du produit, au moins une solution liquide d'un composé alcalin ayant la propriété de laisser, après traitement thermique, un résidu réfractaire inoxydable et auto-cicatrisant,
- sécher le produit imprégné, et
- soumettre le produit imprégné et séché à un traitement thermique afin de former sur les surfaces des pores ouverts du matériau composite un revêtement de protection interne peu sensible à l'humidité constitué par ledit résidu réfractaire.

De préférence, le produit comportant la protection interne est muni d'une couche de revêtement de surface en un matériau résistant à l'usure et à l'oxydation, tel que, par exemple, le carbure de silicium, le carbure de chrome ou un matériau céramique, constituant un revêtement de protection externe réfractaire. Celui-ci est formé à la surface du produit ainsi que dans la porosité résiduelle ouverte, au moins à proximité de la surface. L'ancrage de la protection externe dans la porosité de surface du produit a pour effet un blocage de la protection interne.

L'imprégnation est réalisée au moyen d'une solution liquide d'un composé alcalin notamment un composé de sodium, de potassium ou de lithium, qui laisse un résidu réfractaire inoxydable présentant les caractéristiques requises, notamment d'auto-cicatrisation, dans le domaine d'utilisation envisagé pour le produit. Par auto-cicatrisation, on entend ici la faculté qu'a le résidu réfractaire de former une protection interne exempte de défaut du fait de son ramollissement dans un certain domaine de température, lequel ramollissement permet de combler des trous ou fissures éventuellement apparus dans la protection interne et le matériau sous-jacent.

L'imprégnation est réalisée au moins initialement sous vide pour permettre l'évacuation des gaz occupant la porosité du produit. La phase d'imprégnation sous vide peut être complétée par une phase d'imprégnation sous pression visant à former la solution liquide à occuper la totalité de la porosité à coeur du produit.

Pour des produits en matériau composite destinés à être utilisés à une température relativement élevée, l'imprégnation est de préférence réalisée au moyen d'une solution liquide de silicate alcalin, notamment silicate de sodium ou silicate de potassium.

Une solution liquide de silicate de sodium peut permettre, selon les taux respectifs de $SiO_2$ et $Na_2O$, la formation d'un résidu réfractaire ayant un point de ramollissement de 1100°C. Un tel revêtement de protection interne, de préférence associé à un revêtement de protection externe, offre une protection anti-oxydation efficace pour une température d'utilisation élevée, par exemple pouvant aller jusqu'à 1450°C dans le cas de composites SiC-SiC à interphase pyrocarbone, cette température étant la température maximale à laquelle ce type de matériau composite peut être utilisé.

En outre, le revêtement de protection interne est alors parfaitement compatible avec une mise en place d'un revêtement de protection externe en carbure de silicium par dépôt chimique en phase vapeur qui est normalement réalisé à une température d'environ 1000°C.

Des solutions liquides de silicate de potassium peuvent aussi être utilisées, le point de ramollissement du résidu réfractaire obtenu après traitement thermique ayant une valeur comprise environ entre 700°C et 1100°C selon les proportions relatives de $SiO_2$ et $K_2O$.

On notera en outre que des solutions liquides de silicates de sodium et de potassium sont disponibles qui présentent une viscosité relativement faible permettant une bonne pénétration à coeur de la porosité du matériau composite lors de l'imprégnation. Peuvent en particulier être utilisés un silicate de sodium liquide commercialisé sous la dénomination 7N34 par la société française Rhône-Poulenc et ayant une composition type 25,8% $SiO_2$, 7,7% $Na_2O$ et 66,3% $H_2O$, un silicate de potassium liquide commercialisé sous la dénomination 7K23 par la même société et ayant une composition type 23,2% $SiO_2$, 10% $K_2O$ et 66,8% $H_2O$, ou un silicate de potassium liquide commercialisé sous la dénomination 7K19 toujours par la même société et ayant une composition type 27,2% $SiO_2$, 14,6% $K_2O$ et 58% $H_2O$.

D'autres solutions liquides de composés alcalins peuvent être utilisées, notamment une solution aqueuse de métaphosphate alcalin, par exemple de métaphosphate de sodium, qui laisse après traitement thermique une protection interne offrant une protection anti-oxydation efficace dans un domaine de température de 600°C à 700°C, par exemple, pour des composites de type C-C et C-SiC, et jusqu'à une température d'au moins 850°C et pouvant même atteindre 1050°C pour des composites de type SiC-SiC à interphase pyrocarbone. Pourrait encore être utilisée une solution d'aluminosilicate de lithium.

L'imprégnation est réalisée au moins d'abord sous vide par immersion des produits en matériau composite dans un bain de la solution liquide du composé alcalin choisi à l'intérieur d'une enceinte dans laquelle régne une pression réduite, par exemple environ 30 torrs ($4.10^3 N/m^2$). L'immersion est poursuivie pendant plusieurs dizaines de minutes, par exemple environ 1 heure. La phase d'imprégnation sous vide peut être suivie d'une phase d'imprégnation sous pression visant à parfaire l'incorporation de la solution à coeur au sein de la porosité accessible. Après retour à la pression atmosphérique, les produits sont éventuellement sortis du bain, et égouttés avant d'être séchés. Les produits imprégnés et séchés sont ensuite soumis à un traitement thermique par élévation progressive de la température jusqu'à atteindre une valeur proche, voire légèrement supérieure au point de ramollissement du résidu solide de la solution d'imprégnation. Le traitement thermique a un effet de "nappage", conduisant à la formation d'une couche de protection interne continue et sensiblement uniforme sur la surface des pores ouverts du matériau composite. Le traitement thermique a en outre pour effet de rendre le revêtement interne insensible à l'humidité.

Après refroidissement, les produits peuvent être revêtus d'une couche de protection externe en un matériau résistant à l'oxydation et à l'usure, tel que le carbure de silicium, le carbure de chrome ou une autre céramique réfractaire. La protection externe peut être réalisée par dépôt chimique en phase vapeur dès lors que la température de dépôt nécessaire est compatible avec le matériau de protection interne et le matériau composite. Dans le cas, par exemple, d'un revêtement de protection externe en carbure de silicium formé par dépôt chimique en phase vapeur, le dépôt est réalisé de manière à obtenir un revêtement de plusieurs dizaines de microns d'épaisseur, par exemple entre 30 et 100 microns. En pénétrant au moins dans la porosité de surface du produit, la protection externe se trouve ancrée et assure le blocage de la protection interne. Les techniques de dépôt en phase vapeur de carbure de silicium ou d'autres matériaux céramique sont bien connues et n'ont pas à être décrites ici en détail. D'autres techniques de dépôt connues peuvent être utilisées comme, par exemple, le pistolettage pour pulvériser un mélange d'un liant et d'une poudre du matériau constitutif de la protection externe.

L'efficacité de la protection anti-oxydation apportée par le procédé conforme à l'invention est montrée par les exemples décrits ci-après. Ces exemples concernent tous des matériaux composites à matrice céramique, et plus précisément à matrice SiC, lesquels sont plus particulièrement destinés à des utilisations à températures relativement élevées qui constituent un domaine privilégié d'application du procédé conforme à l'invention. De tels matériaux présentent généralement une porosité ouverte résiduelle d'au moins 10% en volume.

EXEMPLE 1

Un produit en matériau composite de type SiC-SiC à interphase pyrocarbone est réalisé par mise en oeuvre d'un procédé comprenant les étapes suivantes :
- formation d'une structure de renfort fibreux par empilement de couches de tissu en fibres essentiellement en carbure de silicium telles que les fibres commercialisées sous la dénomination "Nicalon" par la société japonaise Nippon Carbon Co.
- infiltration en phase vapeur d'un revêtement intermédiaire de carbone sur les fibres des couches de tissus maintenues dans un outillage, et
- infiltration en phase vapeur d'une matrice de carbure de silicium au sein de la porosité du renfort muni du revêtement d'interface pyrocarbone.
Un tel procédé est décrit en détail dans le brevet FR 84 11591 (publication n° 2 567 874).

Le produit est soumis à un traitement de protection anti-oxydation comprenant une première phase d'imprégnation sous vide au moyen d'une solution liquide de silicate de sodium telle que celle commercialisée sous la référence "7N34" par la société française Rhône-Poulenc. L'imprégnation est réalisée par immersion du produit dans un bain de la solution de silicate de sodium sous une pression d'environ 30 torrs ($4.10^3$ N/m$^2$) pendant environ 1 heure. Après retour à la pression atmosphérique, égouttage et séchage, le produit est soumis à un traitement thermique de plusieurs heures en atmosphère neutre (N$_2$), consistant en une élévation progressive de la température jusqu'à environ 1050°C suivie d'un palier à cette température, avant retour à la température ambiante, de manière à réaliser un "nappage" du revêtement de protection interne et à rendre le silicate peu sensible à l'humidité.

La protection anti-oxydation est éventuellement complétée par formation d'un revêtement de surface externe en carbure de silicium par dépôt chimique en phase vapeur, l'épaisseur du revêtement étant égale à environ 50 microns, le revêtement de surface formant une protection externe ancrée dans la porosité au moins superficielle du produit.

Des mesures de résistance en traction (R$_T$) dans le plan des couches de tissu du renfort ont été réalisées sur le produit en matériau composite sans protection anti-oxydation, avec protection interne seule à base de silicate de sodium et avec protection interne à base de silicate de sodium et protection externe SiC, avant et après vieillissement à l'air dans différentes conditions de durée, de température et de cyclage. Le tableau 1 ci-après résume les résultats obtenus. Pour mieux simuler les conditions d'utilisation, le produit a dans certains cas été précontraint : précontrainte de 80 à 100 MPa en traction et de 90 à 130 MPa en flexion, ce qui engendre des microfissures à l'intérieur du matériau composite.

Tableau 1

| Protection interne | Protection externe | Précontrainte | Vieillissement sous air | $R_T$(MPa) |
|---|---|---|---|---|
| non | non | non | non | 200 |
| non | non | non | 50h à 700°C | 60 |
| oui | non | non | 50h à 700°C | 200 |
| non | non | non | 100h à 850°C | 100 |
| oui | non | non | 100h à 850°C | 200 |
| oui | oui | non | 500h à 850°C | 200 |
| oui | non | oui | 100h à 850°C | 200 |
| oui | oui | oui | 500h à 850°C | 200 |
| oui | non | non | 100 cycles 20-750°C | 200 |
| oui | oui | non | 100 cycles 20-850°C (durée totale 20h) | 200 |
| oui | non | oui | 300h à 850°C (avec cyclage thermomécanique) | 200 |
| oui | oui | non | 100h à 1200°C | 180 |
| oui | non | non | 20h à 1450°C | 180 |

Les résultats donnés dans le tableau 1 montrent clairement l'efficacité du traitement de finition sans lequel le matériau SiC-SiC serait totalement inutilisable en atmosphère oxydante à température élevée.

L'efficacité du traitement est démontrée dans une gamme de température extrémement large, jusqu'à 1450°C, soit une température supérieure à celle généralement admise pour la limite d'utilisation de la fibre SiC "Nicalon".

L'efficacité du traitement est également prouvée non seulement dans des conditions statiques de vieillissement, mais aussi lors de cyclages thermiques, y compris sur des matériaux précontraints, donc microfissurés, après réalisation du traitement de protection anti-oxydation.

Il doit être en outre signalé la tenue excellente à l'humidité du produit muni d'une protection interne suite au traitement thermique. En effet, l'efficacité de la protection est intégralement conservée après que le produit ait été plongé dans de l'eau à 95°C pendant 30 minutes, ou mis en étuve climatisée à 50°C avec une humidité relative de 95% durant 24heures.

EXEMPLE 2

Un produit en matériau composite de type C-SiC est réalisé par mise en oeuvre d'un procédé comprenant les étapes suivantes :
- formation d'une structure de renfort fibreuse par empilement de couches multidirectionnelles (feutres) en fibres de carbone et aiguilletage des couches au fur et à mesure de leur empilement, et
- infiltration en phase vapeur d'un revêtement intermédiaire de carbone sur les fibres de la structure de renfort,
- infiltration en phase vapeur d'une matrice de carbure de silicium au sein de la porosité du renfort fibreux en carbone.

Le produit est soumis ensuite à un traitement de protection anti-oxydation comme décrit dans l'exemple 1. La tenue à l'oxydation est évaluée par mesure de la perte de masse lors d'un test de vieillissement à l'air. Il est considéré que la perte de masse ne doit pas excéder 2% pour que le composite C-SiC conserve 80% de ses propriétés mécaniques. Les résultats obtenus sont résumés dans le tableau 2 ci-après et mettent particulièrement en évidence l'efficacité de la protection.

Tableau 2

| Protection interne | Protection externe | Vieillissement sous air | Perte de poids lors du vieillissement |
|---|---|---|---|
| non | non | 30mn à 900°C | 13 % |
| oui | non | 30mn à 900°C | 1,5 % |
| non | non | 1h à 1200°C | 22,6 % |
| oui | oui | 1h à 1200°C | 1 % |
| non | non | 4h à 1200°C | 34 % |
| oui | non | 4h à 1200°C | 1,4 % |
| oui | oui | 40h à 1200°C | 2 % |

## EXEMPLE 3

Un produit en matériau composite de type C-SiC est réalisé par mise en oeuvre d'un procédé comprenant les étapes suivantes :
- formation d'une structure de renfort fibreuse par empilement de couches de tissus en fibres de carbone, et
- infiltration en phase vapeur d'un revêtement intermédiaire de carbone sur les fibres des couches de tissus maintenues dans un outillage,
- infiltration en phase vapeur d'une matrice de carbure de silicium au sein de la porosité de la structure de renfort maintenue dans un outillage.

Le produit est soumis à un traitement de protection anti-oxydation comme décrit dans l'exemple 1, et la tenue à l'oxydation est évaluée par mesure de la perte de masse lors d'un vieillissement à l'air comme dans l'exemple 2. Le tableau 3 ci-après résume les résultats obtenus.

Tableau 3

| Protection interne | Protection externe | Vieillissement sous air | Perte de poids lors du vieillissement |
|---|---|---|---|
| non | non | 20mn à 1550°C | 2,8 % |
| non | non | 3x20mn(cyclage)à1550°C | 10 % |
| oui | oui | 20mn à 1550°C | 0 % |
| oui | non | 3x20mn(cyclage)à1550°C | 0,15% |
| oui | oui | 3x20mn(cyclage)à1550°C | 0,06% |
| oui | non | 8x20mn(cyclage)à1550°C | <1 % |
| oui | oui | 8x20mn(cyclage)à1550°C | <1 % |

## EXEMPLE 4

Un produit en matériau composite de type SiC-SiC à interphase pyrocarbone est réalisé comme indiqué dans l'exemple 1 puis est soumis à un traitement de protection anti-oxydation pour former une couche de protection interne à base de métaphosphate de sodium.

A cet effet, le produit est imprégné sous vide par une solution aqueuse de métaphosphate de sodium de composition $Na(PO_3)_n$. L'imprégnation est réalisée par immersion du produit dans un bain de cette solution aqueuse sous une pression d'environ 30 torrs ($3.10^2 N/m^2$) pendant environ 1 heure. Après retour à la pression atmosphérique , égouttage et séchage, le produit est soumis à un traitement thermique de plusieurs heures par élévation progressive de la température jusqu'à environ 1050°C suivie d'un palier à cette température, de manière à réaliser un "nappage" du revêtement de protection interne.

La tenue du produit à l'oxydation est évaluée par mesure de la résistance en traction ($R_T$) comme dans l'exemple 1. Les résultats obtenus sont résumés par le tableau 4 ci-après. Ils démontrent l'efficacité de la protection conférée par le revêtement interne de métaphosphate de sodium.

Tableau 4

| Protection interne | Précontrainte | Vieillissement sous air | $R_T$(MPa) |
|---|---|---|---|
| oui | non | non | 200 |
| non | non | 50h à 700°C | 60 |
| oui | non | 50h à 700°C | 200 |
| non | non | 100h à 850°C | 100 |
| oui | non | 100h à 850°C | |
| oui | oui | 100h à 850°C | 150 |
| oui | oui | 500h à 850°C | à |
| oui | oui | 100 cycles à 850°C | 200 |

EXEMPLE 5

Un produit en matériau composite de type C-SiC réalisé comme indiqué dans l'exemple 3 est muni d'une protection interne anti-oxydation en métaphosphate de sodium comme décrit dans l'exemple 4.

La tenue du produit à l'oxydation est évaluée par mesure de la perte de masse et de la résistance en traction $R_T$. Les résultats sont donnés dans le tableau 5 ci-après.

Tableau 5

| Protection interne | Vieillissement sous air | Perte de masse lors du vieillissement | $R_T$(MPa) |
|---|---|---|---|
| non | non | 0 % | 300 |
| non | 17h à 600°C | 10 % | 75 |
| oui | 50h à 600°C | 0 % | 300 |

**Revendications**

1. Procédé pour la protection anti-oxydation d'un produit en matériau composite qui contient du carbone et présente une porosité résiduelle ouverte, caractérisé en ce qu'il comprend les étapes consistant à :
   - réaliser un traitement d'imprégnation au moins en partie sous vide pour incorporer à coeur, au sein de la porosité résiduelle ouverte du produit, au moins une solution liquide d'un composé alcalin ayant la propriété de laisser, après traitement thermique, un résidu réfractaire inoxydable et auto-cicatrisant,
   - sécher le produit imprégné, et
   - soumettre le produit imprégné et séché à un traitement thermique afin de former sur les surfaces des pores ouverts du matériau composite un revêtement de protection interne peu sensible à l'humidité, et, constitué par ledit résidu réfractaire.

2. Procédé selon la revendication 1, caractérisé en ce qu'il comprend en outre la formation, sur le produit muni d'un revêtement de protection interne, d'une couche de revêtement de surface formant une protection externe résistant à l'usure et à l'oxydation et ancrée au moins dans la porosité de surface du produit.

**3.** Procédé selon la revendication 1, caractérisé en ce que l'incorporation à coeur est réalisée par imprégnation sous vide au moyen d'une solution liquide d'un composé d'un élément alcalin choisi parmi le sodium, le potassium et le lithium.

**4.** Procédé selon la revendication 3, caractérisé en ce que le composé alcalin est un silicate de sodium.

**5.** Procédé selon l'une quelconque des revendications 1 à 3, caractérisé en ce que le traitement thermique est réalisé par élévation de la température jusqu'à une valeur voisine du point de ramollissement du résidu réfractaire laissé par la solution d'imprégnation.

**6.** Utilisation du procédé selon l'une quelconque des revendications 1 à 5, pour la protection de produit en matériau composite à matrice céramique.

**7.** Utilisation du procédé selon l'une quelconque des revendications 1 à 5, pour la protection de produit en matériau composite de type céramique-céramique à interphase en pyrocarbone.

**8.** Utilisation du procédé selon l'une quelconque des revendications 1 à 5 pour la protection de produit en matériau composite de type carbone-céramique.

**9.** Produit en matériau composite contenant du carbone et muni d'un revêtement de protection contre l'oxydation, caractérisé en ce que la surface des pores du matériau composite est munie d'un revêtement de protection interne auto-cicatrisante constitué par un composé alcalin réfractaire inoxydable incorporé à coeur, au sein de la porosité ouverte du matériau.

**10.** Produit selon la revendication 9, caractérisé en ce qu'il est en outre muni d'un revêtement de protection de surface formant une protection externe résistant à l'usure et à l'oxydation et ancrée dans la porosité de surface du produit.

**11.** Produit selon l'une quelconque des revendications 9 et 10, caractérisé en ce que la protection interne est à base d'un composé d'un élément alcalin choisi parmi le sodium, le potassium et le lithium.

**12.** Produit selon la revendication 11, caractérisé en ce que le composé alcalin est du silicate de sodium.

**Claims**

**1.** A process for the anti-oxidation protection of a product in composite material which contains carbon and has an open residual porosity, characterized in that it comprises the steps consisting in:
- carrying out an impregnation treatment at least partly in vacuum in order to thoroughly incorporate to the core of the open residual porosity of the product, at least one liquid solution of an alkaline compound having the property of leaving, after a heat treatment, a non-oxidizing and auto-cicatrizing refractory residue,
- drying the impregnated product, and
- subjecting the impregnated and dried product to a heat treatment with a view to forming on the surfaces of the open pores of the composite material, an internal protection coating showing poor sensitivity to moisture, and constituted by said refractory residue.

**2.** Process according to claim 1, characterized in that it further comprises the formation, on the product provided with an internal protection coating, of a superficial coating layer forming a wear- and oxidation-resistant external protection, anchored at least in the superficial porosity of the product.

**3.** Process according to claim 1, characterized in that the core-incorporation is achieved by impregnation in vacuum with a liquid solution of a compound of an alkaline element selected from sodium, potassium and lithium.

**4.** Process according to claim 3, characterized in that the alkaline compound is a sodium silicate.

**5.** Process according to any one of claims 1 to 3, characterized in that the heat treatment is carried out by raising the temperature up to a value approaching the softening point of the refractory residue left by

EP 0 375 537 B1

the impregnation solution.

6. Use of the process according to any one of claims 1 to 5, for protecting a product in composite material with ceramic matrix.

7. Use of the process according to any one of claims 1 to 5, for protecting a product in ceramic-ceramic type composite material with pyrolytic carbon interphase.

8. Use of the process according to any one of claims 1 to 5, for protecting a product in carbon-ceramic type composite material.

9. Product in composite material containing carbon and provided with a protection coating against oxidation, characterized in that the surface of the pores of the composite material is provided with an internal auto-cicatrizing protection coating constituted by an unoxidizable refractory alkaline compound incorporated to the core of the open porosity of the material.

10. Product according to claim 9, characterized in that it is further provided with a superficial protection coating forming an external wear- and oxidation-resistant protection anchored in the superficial porosity of the product.

11. Product according to any one of claims 9 and 10, characterized in that the internal protection is based on a compound of an alkaline element selected from sodium, potassium and lithium.

12. Product according to claim 11, characterized in that the alkaline compound is sodium silicate.

**Patentansprüche**

1. Verfahren zum Schutz gegen Oxidation eines Produkts aus einem Verbundmaterial, das Kohlenstoff enthält und eine offene Restporosität hat,
   **gekennzeichnet durch**
   die folgenden Schritte:
   - Es wird eine Imprägnierungsbehandlung wenigstens teilweise unter Vakuum durchgeführt, um im Kern innerhalb der offenen Restporosität des Produkts wenigstens eine flüssige Lösung einer alkalischen Verbindung einzubringen, die die Eigenschaft hat, nach der Wärmebehandlung einen hitzebeständigen, nicht oxidierenden und selbstvernarbenden Rückstand zu belassen,
   - das imprägnierte Produkt wird getrocknet, und
   - das imprägnierte und getrocknete Produkt wird einer Wärmebehandlung unterworfen, um auf den Oberflächen der offenen Poren des Verbundmaterials eine innere, wenig feuchtigkeitsempfindliche Schutzschicht zu bilden, die aus dem hitzebeständigen Rückstand besteht.

2. Verfahren nach Anspruch 1,
   **dadurch gekennzeichnet, daß**
   es außerdem an dem mit der internen Schutzschicht versehenen Produkt die Bildung einer Oberflächenüberzugsschicht umfaßt, die einen äußeren Schutz bildet, der verschleiß- und oxidationsfest und wenigstens in der Oberflächenporosität des Produkts verankert ist.

3. Verfahren nach Anspruch 1,
   **dadurch gekennzeichnet, daß**
   das Einbringen in den Kern durch Imprägnierung unter Vakuum mittels einer flüssigen Lösung einer Verbindung eines alkalischen Elements erfolgt, das aus Natrium, Kalium und Lithium ausgewählt ist.

4. Verfahren nach Anspruch 3,
   **dadurch gekennzeichnet, daß**
   die alkalische Verbindung Natriumsilicat ist.

5. Verfahren nach einem der Ansprüche 1 bis 3,
   **dadurch gekennzeichnet, daß**
   die Wärmebehandlung durch Steigerung der Temperatur bis zu einem Wert durchgeführt wird, der nahe dem Erweichungspunkt des durch die Imprägnierungslösung belassenen hitzebeständigen Rückstandes liegt.

6. Anwendung des Verfahrens nach einem der Ansprüche 1 bis 5 zum Schutz eines Produkts aus einem Verbundmaterial mit keramischer Matrix.

7. Anwendung des Verfahrens nach einem der Ansprüche 1 bis 5 zum Schutz eines Produkts aus einem Verbundmaterial des Typs Keramik-Keramik mit Pyrokohlenstoff-Zwischenphase.

8. Anwendung des Verfahrens nach einem der Ansprüche 1 bis 5 zum Schutz eines Produkts aus einem Verbundmaterial des Typs Kohlenstoff-Keramik.

9. Produkt aus Verbundmaterial, das Kohlenstoff enthält und mit einer Schutzschicht gegen Oxidation versehen ist,
**dadurch gekennzeichnet, daß**
die Oberfläche der Poren des Verbundmaterials mit einer inneren, selbstvernarbenden Schutzschicht versehen ist, die aus einer alkalischen, hitzebeständigen, nicht oxidierenden Verbindung besteht, die in dem Kern innerhalb der offenen Porosität des Materials eingebracht ist.

10. Produkt nach Anspruch 9,
**dadurch gekennzeichnet, daß**
es außerdem mit einer Oberflächenschutzschicht versehen ist, die einen äußeren, verschleiß- und oxidationsfesten Schutz bildet, der in der Oberflächenporosität des Produkts verankert ist.

11. Verfahren nach Anspruch 9 oder 10,
**dadurch gekennzeichnet, daß**
der innere Schutz auf einer Verbindung eines alkalischen Elements beruht, das aus Natrium, Kalium und Lithium ausgewählt ist.

12. Verfahren nach Anspruch 11,
**dadurch gekennzeichnet, daß**
die alkalische Verbindung Natriumsilicat ist.